# EUROPEAN PATENT SPECIFICATION

(11) **EP 4 700 974 B1**
(45) Date of publication and mention of the grant of the patent: **19.08.2026**
(21) Application number: 26150573.9
(22) Date of filing: 27.03.2023
(51) Int. Cl.: G01N 21/88, G06T 7/00, H01M 10/0525, H01M 10/04, H01M 50/566

(54) **CELL DETECTION METHOD, APPARATUS, AND SYSTEM, COMPUTER DEVICE, AND STORAGE MEDIUM**
ZELLDETEKTIONSVERFAHREN, -VORRICHTUNG UND -SYSTEM, COMPUTERVORRICHTUNG UND SPEICHERMEDIUM
PROCÉDÉ, APPAREIL ET SYSTÈME DE DÉTECTION DE CELLULE, DISPOSITIF INFORMATIQUE ET SUPPORT D'INFORMATIONS

(30) Priority: 10.08.2022 CN 202210957576
(43) Date of publication of application: 25.02.2026
(62) Document number(s) of the earlier application(s) in accordance with Art. 76 EPC: 23793981.4 / 4 350 334
(73) Proprietor: Contemporary Amperex Technology (Hong Kong) Limited, Hong Kong (HK)
(72) Inventor: TU, Yinhang, Ningde, Fujian 352100 (CN); LIU, Xiaofeng, Ningde, Fujian 352100 (CN); SONG, Shichuang, Ningde, Fujian 352100 (CN)
(74) Representative: Lorenz Seidler Gossel Part. mbB

(56) References cited:
- CN-A- 109 636 787
- CN-A- 111 458 351

## Description

This application cites the Chinese patent application no. 2022109575761, filed on August 10, 2022, and entitled "CELL DETECTION METHOD, APPARATUS, AND SYSTEM, COMPUTER DEVICE, AND STORAGE MEDIUM"

### Technical Field

The present application relates to the field of battery adapter plate welding technologies, and in particular, to a cell detection method and apparatus, a computer device, a computer-readable storage medium, a computer program product, and a cell detection system.

### Background Art

With the continuous progress of new energy vehicles, lithium-ion batteries have been widely used in electric vehicles and become one of the main power sources of electric vehicles. At present, lithium batteries used in electric vehicles mainly include lithium iron phosphate batteries. Lithium iron phosphate batteries have characteristics of a high capacity, a high output voltage, good charging and discharging cycling performance, etc.

In the production process of cells, the quality of a process for welding tabs of a cell to an adapter plate directly affects a capacity of the cell, and therefore the process is an extremely important process in the production process of cells of batteries.

Therefore, how to improve the accuracy of defect detection on a cell obtained after tab welding is an urgent problem to be solved. CN 109 636 787 A integrates traditional digital image processing techniques with AI-based deep learning to achieve automatic inspection of battery spot welding quality in industrial production. CN 111 458 351 A provides a battery detection system used for detecting battery in-process products.

### Summary of the Invention

In view of the above problems, the present application provides a cell detection method and apparatus, a computer device, a computer-readable storage medium, a computer program product, and a cell detection system.

In a first aspect, the present application provides a cell detection method according to claim 1 of the present invention, the method being applied to a control device, including:
obtaining, by shooting, a cell picture of a cell obtained after tab welding, the cell picture being shot under illumination of a shadowless light source;
determining a detection object in the cell picture; and
performing defect detection based on the detection object to obtain detection result information.

In the above cell detection method, the cell picture of the cell obtained after tab welding is shot under illumination of the shadowless light source, which reduces a risk of false detection due to an impact of light spots caused by slight bending of an adapter plate, thereby improving the accuracy of defect detection on the cell that is obtained after tab welding.

In some embodiments, the cell picture includes a first cell picture obtained, by shooting, of the cell obtained before an identification layer is applied, and the detection object includes a welding point detection region; and the determining a detection object in the cell picture includes: determining a reference position of an adapter plate in the first cell picture based on a preset adapter plate model; and determining the welding point detection region based on the reference position of the adapter plate.

In the above embodiment, the first cell picture of the cell obtained before the identification layer is applied is shot, which prevents welding point detection from being affected by reflection of a folded identification layer, and the reference position of the adapter plate in the first cell picture is determined based on the preset adapter plate model, which helps accurately and quickly obtain the welding point detection region.

In some embodiments, the detection result information includes a welding point detection result; and the performing defect detection based on the detection object to obtain detection result information includes: looking for and obtaining spot information within the welding point detection region, and obtaining the welding point detection result by analysis based on the spot information.

**In** the above embodiment, the spot information is looked for and obtained within the welding point detection region, and detection on a welding point is implemented based on the obtained spot information.

**In** the current application, the cell picture includes a second cell picture obtained, by shooting, of the cell obtained after an identification layer is applied, and the detection object includes an edge of the identification layer and an edge of a tab; and the determining a detection object in the cell picture includes: determining a reference position of an adapter plate in the second cell picture based on a preset adapter plate model; and determining the edge of the identification layer and the edge of the tab based on the reference position of the adapter plate.

**In** the current application, the second cell picture of the cell obtained after the identification layer is applied is shot, and the reference position of the adapter plate in the second cell picture is determined based on the preset adapter plate model, which helps accurately and quickly extract the edge of the identification layer and the edge of the tab.

**In** some embodiments, the detection result information includes a tab coverage detection result; and the performing defect detection based on the detection object to obtain detection result information includes: performing tab coverage detection based on the edge of the identification layer and the edge of the tab to obtain the tab coverage detection result.

**In** the above embodiment, tab coverage detection is performed based on the edge of the identification layer and the edge of the tab, so as to accurately analyze whether the tab is exposed.

**In** some embodiments, the cell picture is shot by two cameras under illumination of the shadowless light source.

**In** a second aspect, the present application provides a cell detection apparatus, including:
a picture obtaining module configured to obtain, by shooting, a cell picture of a cell obtained after tab welding, the cell picture being shot under illumination of a shadowless light source;
a picture processing module configured to determine a detection object in the cell picture; and
a picture detection module configured to perform defect detection based on the detection object to obtain detection result information.

In a third aspect, the present application provides a computer device, including: a memory and one or more processors, where the memory stores computer-readable instructions that, when executed by the one or more processors, cause the one or more processors to perform the steps of the above cell detection method.

In a fourth aspect, the present application provides one or more computer storage media storing computer readable instructions that, when executed by one or more processors, cause the one or more processors to perform the steps of the above cell detection method.

In a fifth aspect, the present application provides a computer program product, where the computer program, when executed by one or more processors, causes the one or more processors to perform the steps of the above cell detection method.

In a sixth aspect, the present application provides a cell detection system, including: an image obtaining apparatus and a host computer, where the image obtaining apparatus is configured to obtain, by shooting under illumination of a shadowless light source, a cell picture of a cell that is obtained after tab welding, and send the cell picture to the host computer, and the host computer is configured to perform detection on the cell according to the above method.

The above description is only an overview of the technical solutions of the present application. In order to more clearly understand the technical means of the present application to implement same according to the contents of the description, and in order to make the above and other objectives, features and advantages of the present application more obvious and understandable, specific implementations of the present application are exemplarily described below.

### Brief Description of the Drawings

Various other advantages and benefits will become apparent to those of ordinary skill in the art upon reading the following detailed description of preferred implementations. Accompanying drawings are merely for the purpose of illustrating the preferred implementations and are not to be construed as limiting the present application. Moreover, like components are denoted by like reference numerals throughout the accompanying drawings. In the drawings:
FIG. 1 is a schematic diagram of a scenario for a cell detection method according to some embodiments;
FIG. 2 is a flowchart of a cell detection method according to some embodiments;
FIG. 3 is a schematic diagram of a cell picture, shot by upper cameras, of a cell obtained before an identification layer is applied according to some embodiments;
FIG. 4 is a schematic diagram of a cell picture, shot by lower cameras, of a cell obtained before an identification layer is applied according to some embodiments;
FIG. 5 is a schematic diagram of a cell picture, shot by upper cameras, of a cell obtained after an identification layer is applied according to some embodiments;
FIG. 6 is a schematic diagram of a cell picture, shot by lower cameras, of a cell obtained after an identification layer is applied according to some embodiments;
FIG. 7 is a flowchart of a cell detection method according to some other embodiments;
FIG. 8 is a schematic diagram of welding marks in a cell picture according to some embodiments;
FIG. 9 is a flowchart of a cell detection method according to still some other embodiments;
FIG. 10 is a block diagram of a structure of a cell detection apparatus according to some embodiments; and
FIG. 11 is a diagram of an internal structure of a computer device according to some embodiments.

### Detailed Description of Embodiments

In order to make the objective, technical solutions, and advantages of the present application clearer, the present application is further described in detail below with reference to the accompanying drawings and the embodiments. It should be understood that the specific embodiments described herein are merely used to explain the present application and are not intended to limit the present application.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "comprising" and "having" and any variations thereof in the description and the claims of the present application as well as the brief description of the accompanying drawings described above are intended to cover non-exclusive inclusion.

In the description of the embodiments of the present application, the technical terms "first", "second", etc. are merely used for distinguishing different objects, and are not to be construed as indicating or implying relative importance or implicitly indicating the number, particular order or primary-secondary relationship of the indicated technical features. In the description of the embodiments of the present application, the phrase "a plurality of" means two or more, unless otherwise explicitly and specifically defined.

The phrase "embodiment" mentioned herein means that the specific features, structures and characteristics described in conjunction with the embodiment may be included in at least some embodiments of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

In the description of the embodiments of the present application, the term "and/or" is merely intended to describe the associated relationship of associated objects, indicating that three relationships can exist, for example, A and/or B can include: only A exists, both A and B exist, and only B exists. In addition, the character "/" herein generally indicates an "or" relationship between the associated objects.

In the description of the embodiments of the present application, the term "a plurality of" means two or more (including two), similarly the term "a plurality of groups" means two or more groups (including two groups), and the term "a plurality of pieces" means two or more pieces (including two pieces).

**In** the description of the embodiments of the present application, the orientation or position relationship indicated by the technical terms "central", "longitudinal", "transverse", "length", "width", "thickness", "upper", "lower", "front"; "rear", "left", "right", "vertical", "horizontal", "top", "bottom", "inner", "outer", "clockwise", "counterclockwise", "axial", "radial", "circumferential", etc. are based on the orientation or position relationship shown in the accompanying drawings and are merely intended to facilitate and simplify the description of the embodiments of the present application, rather than indicating or implying that the apparatus or element considered must have a particular orientation or be constructed and operated in a particular orientation, and therefore not to be construed as limiting the embodiments of the present application.

**In** the description of the embodiments of the present application, unless otherwise explicitly specified and defined, the technical terms such as "install", "couple", "connect", and "fix" should be understood in a broad sense, for example, they may be a fixed connection, a detachable connection, or an integrated connection; may be a mechanical connection or an electric connection; and may be a direct connection or an indirect connection by means of an intermediate medium, or may be communication between interiors of two elements or interaction between the two elements. For those of ordinary skill in the art, the specific meanings of the above terms in the embodiments of the present application can be understood according to specific situations.

With the development of science and technology and the continuous progress of society, the application fields of power batteries continue to expand. They are not only used in electric bicycles, electric motorcycles, electric vehicles, and other electric transportation vehicles, but also used in the fields of military equipment, aerospace, etc. Power batteries are power supplies that supply power to tools, mostly are valve-regulated sealed lead-acid batteries, open tubular lead-acid batteries, and lithium iron phosphate batteries, and have characteristics such as high energy, high power, and high energy density. The quality of a process for welding tabs of a cell to an adapter plate of the cell through ultrasonic welding affects a capacity of the cell, and therefore the process is an extremely important process in the production process of cells of batteries. In view of this, the present application provides a cell detection method. In the method, a cell picture of a cell obtained after tab welding is shot under illumination of a shadowless light source, and a detection object in the cell picture is determined; and defect detection is performed based on the detection object to obtain detection result information. The cell picture of the cell obtained after tab welding is shot under illumination of the shadowless light source, which reduces a risk of false detection due to an impact of light spots caused by slight bending of an adapter plate.

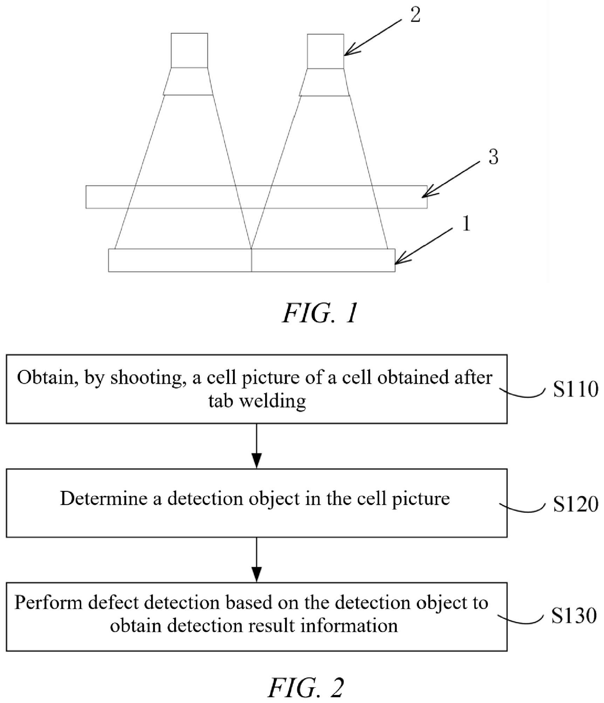

The cell detection method according to an embodiment of the present application may be applied to an application environment shown in FIG. 1. A cell 1 obtained after tab welding is transported by a cell conveyor belt under control of a control device to a detection station, cameras 2 and a light source 3 are provided at the detection station and located above the cell 1, and the light source 3 is a shadowless light source. A cell picture of the cell 1 under illumination of the shadowless light source is shot by the cameras 2, the cell picture is uploaded to the control device, and the control device determines a detection object in the cell picture, and performs defect detection based on the detection object to obtain detection result information. There are two cameras 2, the two cameras are respectively used to shoot pictures of two adapter plate regions of the cell, and the cameras 2 may be specifically charge coupled device (CCD) cameras or other cameras. Specifically, the control device may include a control module and a host computer. The control module controls the cell conveyor belt to transport the cell 1, and the host computer controls the cameras 2 to shoot the cell picture of the cell 1, and performs image analysis to obtain the detection result information. The control module may be a programmable logic controller (PLC), a microcontroller unit (MCU), or the like, and the host computer may be a notebook computer, a desktop computer, a logic controller, or the like.

Further, The detection station may include a station for detection before identification layer application and a station for detection after identification layer application, an upper layer camera, a upper layer light source, a lower layer light source, and a lower layer camera may be arranged in sequence from top to bottom at each of the two detection stations, and the cell 1 is within a camera shooting range of the upper layer camera and the lower layer camera and within a range of light of the upper layer light source and the lower layer light source, for example, the upper layer camera and the upper layer light source may be located above the cell 1, and the lower layer camera and the lower layer light source may be located below the cell 1. Specifically, there are two upper layer cameras and two lower layer cameras, and both the upper layer light source and the lower layer light source are shadowless light sources. The cell 1 obtained after tab welding first arrives at the station for detection before identification layer application, and the upper layer cameras and the lower layer cameras at the detection station perform image acquisition. After the image acquisition is completed, the host computer performs defect detection on a shot cell picture of the cell obtained before an identification layer is applied, the control module transports the cell 1 to an identification layer application station, controls an identification layer to be applied onto the cell 1 at the identification layer application station, and then controls the cell 1 onto which the identification layer is applied to the station for detection after identification layer application, then the upper layer cameras and the lower layer cameras at the detection station perform image acquisition, and after the image acquisition is completed, the host computer performs defect detection on a shot cell picture of the cell obtained after the identification layer is applied. In addition, after the defect detection, the host computer further outputs an instruction to the control module, and the control module transports the cell 1 to a next station. For ease of understanding, the following explanation and description are given using an example in which the control module is a PLC.

In some embodiments, as shown in FIG. 2, a cell detection method is provided, where the method is applied to a control device, the control device may specifically be implemented by a host computer, and the method includes the following steps.

In step S110, a cell picture of a cell obtained after tab welding is obtained by shooting.

The cell picture is shot under illumination of a shadowless light source. The shadowless light source may be specifically a flat shadowless light source, and is a diffuse reflection light source. Using a shadowless light source may reduce an impact of bending of an adapter plate and folding of tabs on the detection stability. It can be understood that a method for welding a tab to an adapter plate is not unique, and may be an ultrasonic welding method or another welding method.

Specifically, after it is detected, a sensor, that the cell is transported to the station for detection before identification layer application and a station for detection after identification layer application, the upper layer cameras and the lower layer cameras at the corresponding station are triggered to shoot pictures, to obtain the cell picture. When the upper layer cameras shoot pictures when receiving a shooting instruction, the upper layer light source emits light, and the lower layer cameras shoot pictures at the same time, so as to obtain two sets of images, one of which is shot by the upper layer cameras under illumination of the upper layer light source, and the other one is shot by the lower layer cameras under backlight illumination of the upper layer light source. Similarly, when the lower layer cameras shoot pictures when receiving a shooting instruction, the upper layer cameras shoot pictures at the same time, and a total of four sets of images are obtained. The images shot by the upper layer cameras are used for detecting cracking of tabs after welding, etc., and the images shot by the lower layer cameras are used for detecting an area of a welding mark, etc.

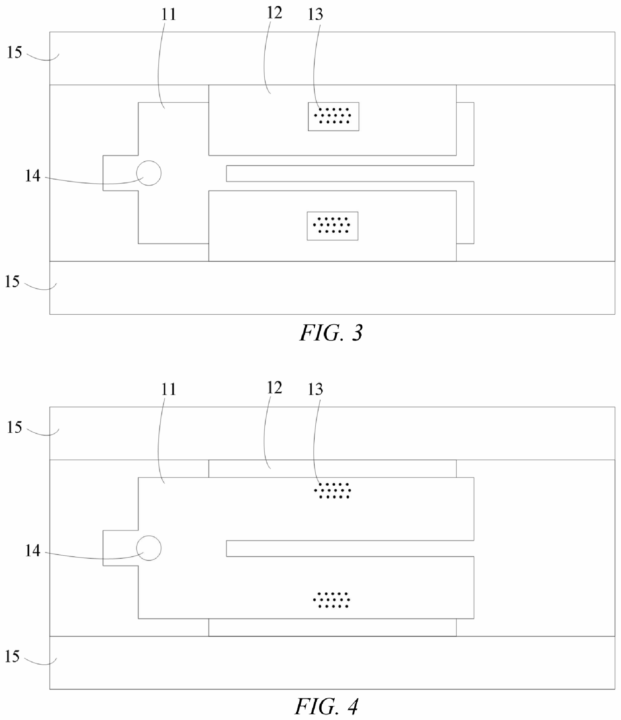

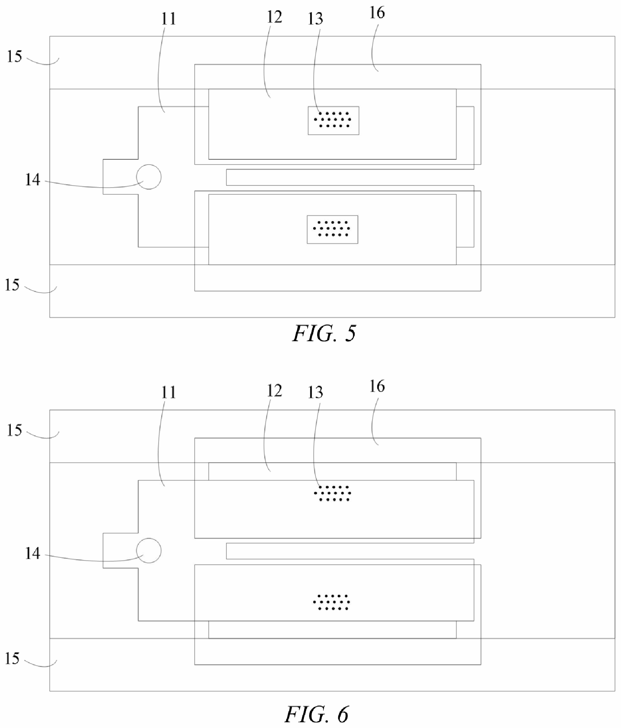

As shown in FIG. 3 and FIG. 4, each of the shot cell pictures of the cell obtained before an identification layer is applied contains an adapter plate 11, tabs 12, welding marks 13, a region 14 for welding in a next process, and cell separator regions 15. As shown in FIG. 5 and FIG. 6, each of the shot cell pictures of the cell obtained after the identification layer is applied contains an adapter plate 11, tabs 12, welding marks 13, a region 14 for welding in a next process, cell separator regions 15, and identification layers 16. The identification layers 16 are used for setting of identification information (for example, a two-dimensional code) of the cell 1, the identification layers 16 may be specifically a blue adhesive, the two-dimensional code of the cell is set at the center of the blue adhesive, and there is a need to ensure a position of the blue adhesive in defect detection, so as to avoid the following case: a barcode scanner at a next station in the production line fails to scan and read the code, causing a device breakdown. In addition, after shooting by the cameras is completed, the host computer sends a signal to the PLC, and the PLC controls the cell conveyor belt to transport the cell to a next station.

In step S120, a detection object in the cell picture is determined.

The detection object refers to a feature related to defect detection in the cell picture, and it can be understood that, cell pictures used for detection and detection objects in the cell pictures may vary depending on detection content of the cell. For example, defect detection on a cell may include welding mark area detection, detection on whether a welding mark is completely on a tab, tab cracking detection, tab outward folding detection, identification layer misalignment detection, tab exposing detection, detection on a distance between adapter plates, adapter plate reverse detection, etc. When performing defect detection on the cell, the host computer extracts a related feature from a corresponding cell picture and uses the feature as the detection object. For example, when performing tab exposing detection, a position of an adapter plate is extracted from the backlight picture shot by the upper layer cameras and the lower layer cameras at the station for detection after identification layer application, and an edge of the identification layer and an edge of a tab are determined as the detection object based on the position of the adapter plate, so as to perform the tab exposing detection.

In step S130, defect detection is performed based on the detection object to obtain detection result information. After determining the detection object in the cell picture, the host computer may determine a related detection region based on the detection object, and perform corresponding defect detection on the detection region to obtain the detection result information.

In the above cell detection method, the cell picture of the cell obtained after tab welding is shot under illumination of the shadowless light source, which reduces a risk of false detection due to an impact of light spots caused by slight bending of an adapter plate, thereby improving the accuracy of defect detection on the cell obtained after tab welding.

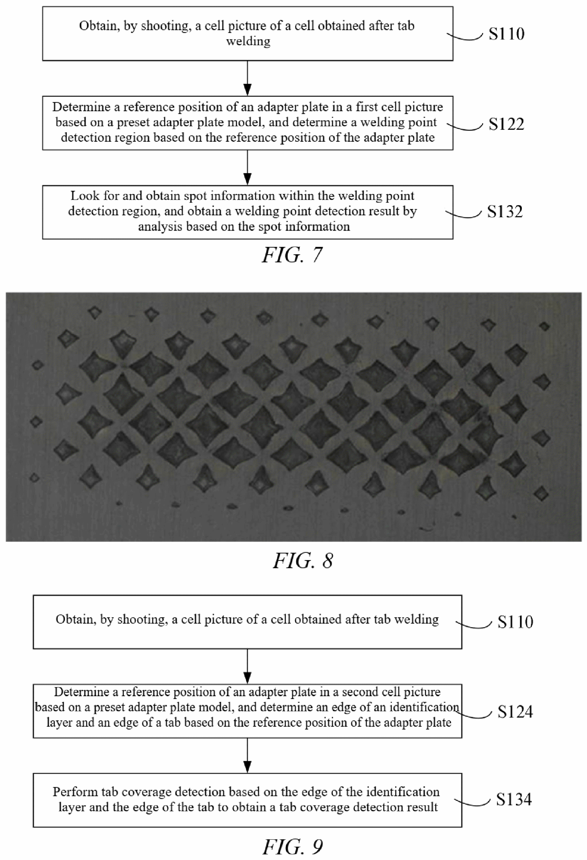

In some embodiments, the cell picture includes a first cell picture obtained, by shooting, of the cell obtained before an identification layer is applied, and the detection object includes a welding point detection region. As shown in FIG. 7, step S120 includes step S122: determining a reference position of an adapter plate in the first cell picture based on a preset adapter plate model, and determining a welding point detection region based on the reference position of the adapter plate.

The reference position is used as a reference starting point for determining the detection object, a specific setting method of the reference position is not unique, and a center position or another position of the adapter plate may be selected as the reference position. As shown in FIG. 4, the host computer obtains a color image of the cell shot by the lower layer cameras at the station for detection before identification layer application, and converts the color image into a black-and-white image and uses the image as the first cell picture. Assuming that a center position of the adapter plate 11 is used as the reference position, the host computer establishes a coordinate system based on the center position of the adapter plate 11, finds edges of the adapter plate 11 to determine an adapter plate region, and establishes a positioning space based on the adapter plate region, so as to ensure the stability of the welding point detection region.

Specifically, an adapter plate model may be established by using the CogPMAligTool tool, and the adapter plate model is matched from the first cell picture, to obtain center position coordinates (X, Y, R) of the adapter plate. A spatial coordinate system is established based on the coordinates by using the CogFixtureTool tool, CCD vision is established, and edge finding regions are set by using the edge finding tool CogFindLineTool in a spatial tracking mode, so that corresponding edges may be obtained; and corresponding attributes of the edge finding tool may be set (for example, a polarity is set to Dark to Light/Light to Dark, and a priority of an edge calculation method is set to region center, search direction, or the like), so that corresponding edge positions are obtained.

During detection on a black welding mark through the identification layer, the identification layer reflects strongly if it is folded, such that the black welding mark is not found, causing false detection. Therefore, in this embodiment, a postwelding detection station (for detection before applying an adhesive) is added, the first cell picture of the cell obtained before an identification layer is applied is shot, which prevents welding point detection from being affected by reflection of a folded identification layer, and the reference position of the adapter plate in the first cell picture is determined based on the preset adapter plate model, which helps accurately and quickly obtain the welding point detection region.

Correspondingly, in some embodiments, the detection result information includes a welding point detection result. With further reference to FIG. 7, step S130 includes step S132: looking for and obtaining spot information within the welding point detection region, and obtaining the welding point detection result by analysis based on the spot information.

After determining the welding point detection region, the host computer may use the Blob operator tool to detect the spot information within the detection region, so as to determine whether it meets specifications. The spot information is looked for and obtained within the welding point detection region, and detection on a welding point is implemented based on the obtained spot information. A specific type of the spot information is not unique, and in some embodiments, the spot information includes the number of spots and/or a sum of spot areas. It may be set, according to actual situations, that welding point detection is performed based on either or both of the number of spots and a sum of spot areas, so as to improve the detection convenience.

FIG. 8 is a schematic diagram of welding marks in a cell picture. Specifically, the CogBlobTool tool may be used with a template tracking space, so as to ensure that a detection region of the Blob tool is the welding point detection region. Because welding points are imaged as black spots, black spots in the region (the number of spots in the region and an area of each spot) are obtained by using the Blob tool. After the number of spots is known, a sum of areas of all spots is calculated with a loop statement, and whether the welding points meet specifications is determined by comparing the sum with a set welding point area. For example, finding is performed on the welding point detection region in real time by using the CogBlobTool1 operator, the number of spots found in real time is obtained by CogBlobTool1.Results.GetBlobs().count, and a loop is performed with a loop statement For(int i=0;i<Count-1,i++) to obtain areas of all spots in the corresponding region, obtained area data is stored in an array by CogBlobTool1.Results.GetBlobs()[i].Area, areas are accumulated to obtain a sum of areas, and whether an area of a welding mark meets specifications is determined.

In addition, after the welding point detection is completed, if a welding point detection result does not meet the specifications, the host computer sends an instruction indicating unqualified to the PLC, and the PLC controls the cell conveyor belt to transport the cell obtained before an identification layer is applied to a groove for the unqualified. If the welding point detection result meets the specifications, the host computer sends an instruction indicating qualified to the PLC, and the PLC controls the cell conveyor belt to transport the cell to the identification layer application station.

In the current application, the cell picture includes a second cell picture obtained, by shooting, of the cell obtained after an identification layer is applied, and the detection object includes an edge of the identification layer and an edge of a tab. As shown in FIG. 9, step S120 includes step S124: determining a reference position of an adapter plate in the second cell picture based on a preset adapter plate model, and determining an edge of an identification layer and the edge of the tab based on the reference position of the adapter plate.

Specifically, after the identification layer is applied onto the cell and the cell arrives at the station for detection after identification layer application, the host computer obtains a backlight image shot by the upper layer cameras and the lower layer cameras at the station for detection after identification layer application, and uses the image as the second cell picture. Tab coverage detection is performed based on the principle of backlight, which can increase an edge contrast, and prevent an impact of light spots caused by reflection of a folded identification layer from affecting the stability of edge finding. As shown in FIG. 5 and FIG. 6, also assuming that a center position of the adapter plate 11 in the second cell picture is used as the reference position, the host computer establishes a coordinate system based on the center position of the adapter plate 11, finds edges of the adapter plate 11 to determine an adapter plate region, and locates a left edge and a right edge of the tab 12 and a left edge and a right edge of the identification layer 16 based on the adapter plate. Specifically, similarly, an adapter plate model may be established by using the CogPMAligTool tool, and the adapter plate model is matched from the second cell picture, to obtain center position coordinates (X, Y, R) of the adapter plate. A spatial coordinate system is established based on the coordinates by using the CogFixtureTool tool, CCD vision is established, and edge finding regions are set by using the edge finding tool CogFindLineTool in a spatial tracking mode, so that corresponding edges may be obtained; and corresponding attributes of the edge finding tool may be set (for example, a polarity is set to Dark to Light/Light to Dark, and a priority of an edge calculation method is set to region center, search direction, or the like), so that corresponding edge positions are obtained.

In this application, the second cell picture of the cell obtained after the identification layer is applied is shot, and the reference position of the adapter plate in the second cell picture is determined based on the preset adapter plate model, which helps accurately and quickly extract the edge of the identification layer and the edge of the tab.

Correspondingly, in some embodiments, the detection result information includes a tab coverage detection result. With further reference to FIG. 9, step S130 includes step S134: performing tab coverage detection based on the edge of the identification layer and the edge of the tab to obtain the tab coverage detection result.

After the left edge and the right edge of the tab and the left edge and the right edge of the identification layer are located based on the adapter plate, coordinates of an edge of the identification layer is compared with coordinates of a corresponding edge of the tab, so as to determine whether the identification layer fully covers the tab. Tab coverage detection is performed based on the edge of the identification layer and the edge of the tab, so as to accurately analyze whether the tab is exposed.

In addition, after the tab coverage detection is completed, if the tab is not exposed, the host computer sends an instruction indicating qualified to the PLC, and the PLC controls the cell conveyor belt to transport the cell to a next station. If the tab is exposed, the host computer sends an instruction indicating unqualified to the PLC, and the PLC controls the cell conveyor belt to transport the cell to the groove for unqualified.

It should be understood that although each step in the flowchart of each embodiment described above is displayed in succession as indicated by an arrow, these steps are not necessarily executed in succession in the order indicated by the arrows. Unless explicitly described herein, the execution of these steps is not limited to a strict order, instead, the steps may be executed in another order. In addition, at least some steps in the flowcharts of the embodiments as described above may include multiple steps or multiple stages. These steps or stages are not necessarily executed or completed at the same moment, but can be executed at different moments. These steps or stages are also not necessarily executed in succession, but can be executed in turn or alternately with at least some other steps or steps or stages of other steps.

Based on the same inventive concept, an embodiment of the present application further provides a cell detection apparatus configured to implement the above cell detection method. An implementation solution for solving the problems that is provided by the apparatus is similar to the implementation solution of the above method. Therefore, for specific definitions of one or more embodiments of the cell detection apparatus provided below, reference may be made to the definitions of the above cell detection method, and details are not described herein again.

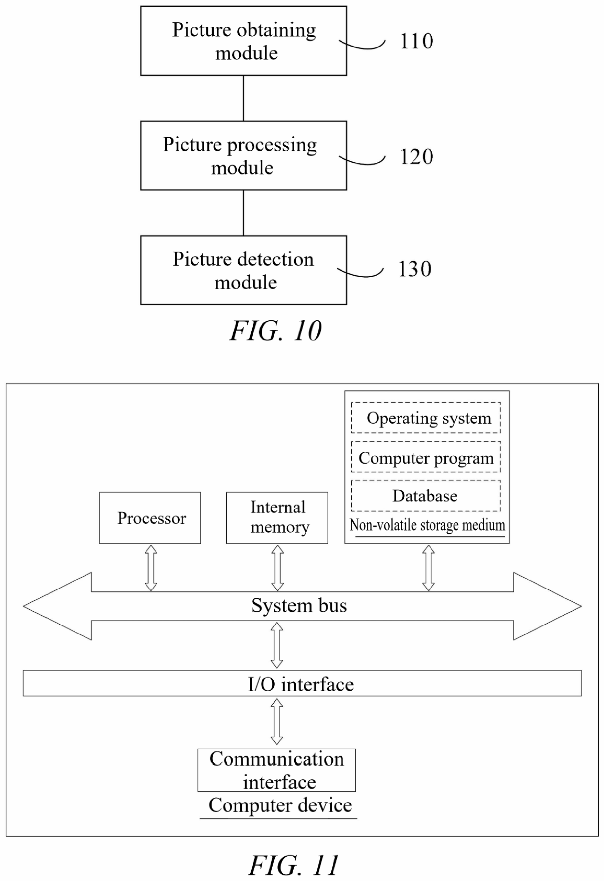

In some embodiments, as shown in FIG. 10, a cell detection apparatus is provided, including: a picture obtaining module 110, a picture processing module 120, and a picture detection module 130.

The picture obtaining module 110 is configured to obtain, by shooting, a cell picture of a cell obtained after tab welding, the cell picture being shot under illumination of a shadowless light source.

The picture processing module 120 is configured to determine a detection object in the cell picture.

The picture detection module 130 is configured to perform defect detection based on the detection object to obtain detection result information.

In some embodiments, the cell picture includes a first cell picture obtained, by shooting, of the cell obtained before an identification layer is applied, and the detection object includes a welding point detection region. The picture processing module 120 determines a reference position of an adapter plate in the first cell picture based on a preset adapter plate model, and determines a welding point detection region based on the reference position of the adapter plate.

In some embodiments, the detection result information includes a welding point detection result. The picture detection module 130 looks for and obtains spot information within the welding point detection region, and obtains the welding point detection result by analysis based on the spot information.

In the current application, the cell picture includes a second cell picture obtained, by shooting, of the cell obtained after an identification layer is applied, and the detection object includes an edge of the identification layer and an edge of a tab. The picture processing module 120 determines a reference position of an adapter plate in the second cell picture based on a preset adapter plate model, and determines an edge of an identification layer and the edge of the tab based on the reference position of the adapter plate.

In some embodiments, the detection result information includes a tab coverage detection result. The picture detection module 130 performs tab coverage detection based on the edge of the identification layer and the edge of the tab to obtain the tab coverage detection result.

All or some of the various modules in the above cell detection apparatus may be implemented by software, hardware, and a combination thereof. The modules above may be embedded in or independent of a processor in a computer device in the form of hardware, and may also be stored in a memory of the computer device in the form of software, so that the processor invokes the corresponding operations executing the modules above.

In some embodiments, a computer device is provided. The computer device may be a server or a terminal. Assuming that the computer device is a server, a diagram of an internal structure thereof may be shown in FIG. 11. The computer device includes a processor, a memory, and a network interface that are connected through a system bus. The processor of the computer device is configured to provide computing and control capabilities. The memory of the computer device includes a non-volatile storage medium and an internal memory. The non-volatile storage medium stores an operating system, a computer program, and a database. The internal memory provides an environment for operation of the operating system and the computer program in the non-volatile storage medium. The database of the computer device is used to store data. The network interface of the computer device is for communicating with an external terminal through a network connection. When the computer program is executed by the processor, a cell detection method is implemented.

Those skilled in the art can understand that a structure shown in FIG. 11 is merely a block diagram of a part of the structure related to the solutions of the present application, and does not constitute a limitation on the computer device to which the solutions of the present application is applied. Specifically, the computer device may include more or fewer components than those shown in the drawings, or have some components combined, or have different component arrangements.

**In** some embodiments, a computer device is provided, including: a memory and one or more processors, where the memory stores computer-readable instructions that, when executed by the one or more processors, cause the one or more processors to perform the steps in the above cell detection method embodiments.

**In** some embodiments, one or more computer storage media are provided, where the computer storage media store computer readable instructions that, when executed by one or more processors, cause the one or more processors to implement the steps in the above cell detection method embodiments.

**In** some embodiments, a computer program product is provided, including a computer program, where the computer program, when executed by one or more processors, causes the one or more processors to perform the steps in the above cell detection method embodiments.

**In** some embodiments, a cell detection system is further provided, including: an image obtaining apparatus and a host computer, where the image obtaining apparatus is configured to obtain, by shooting under illumination of a shadowless light source, a cell picture of a cell obtained after tab welding, and send the cell picture to the host computer, and the host computer is configured to perform detection on the cell according to the above method.

The image obtaining apparatus uses two cameras, specifically two CCD cameras. Two cameras arranged above the cell are used as upper layer cameras, two cameras arranged below the cell are used as lower layer cameras, the shadowless light source may be specifically a flat shadowless light source, a flat shadowless light source arranged above the cell is used as an upper layer light source, and a flat shadowless light source arranged below the cell is used as a lower layer light source. The host computer may be a notebook computer, a desktop computer, etc.

Specifically, to improve a detection effect and reduce probabilities of false detection and missed detection, the two cameras may be 12MP color area-array cameras, fields of view of the cameras in an X direction may be 260 millimeters (mm), and pixel **precision** may be 0.06 mm/pixel, so that the two cameras may implement full field-of-view coverage of the cell. As the cell is transported to a detection station, under the condition of ensuring precision, pictures of corresponding tab and adapter plate welding regions of a cell are respectively shot by the two cameras, a variety of products may be applicable, and a camera field of view ranges from a minimum of 20° to a maximum of 90°. **In** the detection process, to enable the camera to shoot a clearer cell picture, a distance between the two cameras and the cell may be set to 193 mm ± 25 mm, a distance between the two cameras may be adjusted based on different models of cells, a distance between the shadowless light source and the cell may be set to 40 mm ± 10 mm, and angles are parallel to the cell.

Those of ordinary skill in the art can understand that all or some of the procedures in the methods of the above embodiments can be implemented by a computer program to instruct related hardware. The computer program can be stored in a computer-readable storage medium. The program, when executed, may include the procedures in the above method embodiments. The storage medium may be a non-volatile storage medium such as a magnetic disk, an optical disc, or a read-only memory (ROM), a random access memory (RAM), or the like.

The various technical features of the above embodiments can be combined in any manner, and in order to simplify the description, not all possible combinations of the various technical features of the above embodiments are described. However, as long as there is no conflict between the combinations of these technical features, they should be considered to be within the scope of the description in this application.

The above embodiments merely represent several implementations of the present application, giving specifics and details thereof, but should not be understood as limiting the scope of the present patent of invention thereby. It should be pointed out that those of ordinary skill in the art may also make several variations and improvements without departing from the concept of the present application. All these variations and improvements fall within the scope of protection of the present application. Therefore, the scope of protection of the present application shall be subject to the appended claims.

## Claims

1. A computer implemented battery cell detection method, comprising:
obtaining, by shooting, a cell picture of a battery cell (1) obtained after tab welding, the cell picture being shot under illumination of a shadowless light source (3);
determining a detection object in the cell picture; and
performing defect detection based on the detection object to obtain detection result information, **characterized in that**
the cell picture comprises a second cell picture obtained, by shooting, of the battery cell (1) obtained after an identification layer is applied, and the detection object comprises an edge of the identification layer and an edge of a tab; and the determining a detection object in the cell picture comprises:
determining a reference position of an adapter plate (11) in the second cell picture based on a preset adapter plate model; and
determining the edge of the identification layer and the edge of the tab (12) based on the reference position of the adapter plate (11).

2. The method according to claim 1, wherein the detection result information comprises a tab coverage detection result; and the performing defect detection based on the detection object to obtain detection result information comprises:
performing tab coverage detection based on the edge of the identification layer and the edge of the tab (12) to obtain the tab coverage detection result.

3. The method according to any one of claims 1 to 2, wherein the cell picture is shot by two upper cameras arranged above the cell under illumination of an upper layer shadowless light source arranged above the cell, and is shot by two lower cameras arranged below the cell under illumination of a lower layer shadowless light source arranged below the cell, optionally the upper layer shadowless light source and the lower layer shadowless light source are flat shadowless light source.

4. The method according to claim 3, wherein the cell picture comprises a first cell picture obtained, by shooting, of the battery cell (1) obtained before an identification layer is applied, and the detection object comprises a welding point detection region; and the determining a detection object in the cell picture comprises:
determining a reference position of an adapter plate (11) in the first cell picture based on a preset adapter plate model; and
determining the welding point detection region based on the reference position of the adapter plate (11).

5. The method according to claim 4, wherein the detection result information comprises a welding point detection result; and the performing defect detection based on the detection object to obtain detection result information comprises:
looking for and obtaining spot information within the welding point detection region, and obtaining the welding point detection result by analysis based on the spot information, wherein welding points are imaged as black spots.

6. The method according to claim 5, wherein the spot information comprises the number of spots and/or a sum of spot areas.

7. The method according to any one of claims 3 to 6, wherein the cell picture is shot by two cameras (2) under illumination of the shadowless light source (3).

8. The method according to any one of claims 3 to 7, comprising:
detecting by a sensor that the cell is transported to a station for detection before identification layer application and a station for detection after identification layer application,
triggering the upper layer cameras and the lower layer cameras at the corresponding station to shoot pictures, to obtain the cell picture,
wherein when the upper layer cameras shoot pictures when receiving a shooting instruction, the upper layer shadowless light source emits light, and the lower layer cameras shoot pictures at the same time, so as to obtain two sets of images, one of which is shot by the upper layer cameras under illumination of the upper layer shadowless light source, and the other one is shot by the lower layer cameras under backlight illumination of the upper layer shadowless light source;
and wherein when the lower layer cameras shoot pictures when receiving a shooting instruction, the upper layer cameras shoot pictures at the same time, and a total of four sets of images are obtained.

9. A battery cell detection apparatus, comprising:
a picture obtaining module (110) configured to obtain, by shooting, a battery cell (1) picture of a cell obtained after tab welding, the cell picture being shot under illumination of a shadowless light source (3);
a picture processing module (120) configured to determine a detection object in the cell picture; and
a picture detection module (130) configured to perform defect detection based on the detection object to obtain detection result information, wherein the cell picture comprises a second cell picture obtained, by shooting, of the battery cell (1) obtained after an identification layer is applied, and the detection object comprises an edge of the identification layer and an edge of a tab; and the determining a detection object in the cell picture comprises:
determining a reference position of an adapter plate (11) in the second cell picture based on a preset adapter plate model; and
determining the edge of the identification layer and the edge of the tab (12) based on the reference position of the adapter plate (11).

10. A computer device, comprising: a memory and one or more processors, wherein the memory stores computer-readable instructions that, when executed by the one or more processors, cause the one or more processors to perform steps of a computer implemented method according to any one of claims 1 to 8.

11. One or more computer storage media storing computer readable instructions that, when executed by one or more processors, cause the one or more processors to perform steps of a method according to any one of claims 1 to 8.

12. A computer program product, comprising a computer program that, when executed by one or more processors, causes the one or more processors to perform steps of a computer implemented method according to any one of claims 1 to 8.

13. A cell detection system, comprising: an image obtaining apparatus and a host computer, wherein the image obtaining apparatus is configured to obtain, by shooting under illumination of a shadowless light source (3), a cell picture of a battery cell (1) obtained after tab welding, and send the cell picture to the host computer, and the host computer is configured to perform detection on the battery cell (1) by using a computer implemented method according to any one of claims 1 to 8.

14. The system according to claim 13, wherein the image obtaining apparatus comprises two cameras (2).

## Patentansprüche

1. Computerimplementiertes Batteriezellenerkennungsverfahren, mit den folgenden Schritten:
Erhalten eines Zellenbildes einer Batteriezelle (1), die nach dem Laschenschweißen erhalten wurde, durch Fotografieren, wobei das Zellenbild unter Beleuchtung einer schattenlosen Lichtquelle (3) aufgenommen wird;
Ermitteln eines Erkennungsobjekts in dem Zellenbild; und
Durchführen einer Fehlererkennung auf der Grundlage des Erkennungsobjekts, um Erkennungsergebnisinformationen zu erhalten, **dadurch gekennzeichnet, dass**
das Zellenbild ein zweites Zellenbild umfasst, das durch Fotografieren der Batteriezelle (1) erhalten wurde, die nach dem Aufbringen einer Identifikationsschicht erhalten wurde, und das Erkennungsobjekt einen Rand der Identifikationsschicht und einen Rand einer Lasche umfasst; und das Ermitteln eines Erkennungsobjekts in dem Zellenbild Folgendes umfasst:
Ermitteln einer Referenzposition einer Adapterplatte (11) in dem zweiten Zellenbild auf der Grundlage eines voreingestellten Adapterplattenmodells; und
Ermitteln des Randes der Identifikationsschicht und des Randes der Lasche (12) auf der Grundlage der Referenzposition der Adapterplatte (11).

2. Verfahren nach Anspruch 1, wobei die Erkennungsergebnisinformation ein Ergebnis der Laschenabdeckungserkennung umfasst; und das Durchführen der Fehlererkennung auf der Grundlage des Erkennungsobjekts, um Erkennungsergebnisinformationen zu erhalten, Folgendes umfasst:
Durchführen der Laschenabdeckungserkennung auf der Grundlage des Randes der Identifikationsschicht und des Randes der Lasche (12), um das Ergebnis der Laschenabdeckungserkennung zu erhalten.

3. Verfahren nach einem der Ansprüche 1 bis 2, wobei das Zellenbild durch zwei über der Zelle angeordnete obere Kameras unter Beleuchtung einer über der Zelle angeordneten schattenlosen Lichtquelle der oberen Schicht aufgenommen wird, und durch zwei unter der Zelle angeordnete untere Kameras unter Beleuchtung einer unter der Zelle angeordneten schattenlosen Lichtquelle der unteren Schicht aufgenommen wird, wobei optional die schattenlose Lichtquelle der oberen Schicht und die schattenlose Lichtquelle der unteren Schicht flache Lichtquellen sind.

4. Verfahren nach Anspruch 3, wobei das Zellenbild ein erstes Zellenbild umfasst, das durch Fotografieren der Batteriezelle (1) erhalten wurde, die vor dem Aufbringen einer Identifikationsschicht erhalten wurde, und das Erkennungsobjekt einen Schweißpunkt-Erkennungsbereich umfasst; und das Ermitteln eines Erkennungsobjekts in dem Zellenbild Folgendes umfasst:
Ermitteln einer Referenzposition einer Adapterplatte (11) in dem ersten Zellenbild auf der Grundlage eines voreingestellten Adapterplattenmodells; und
Ermitteln des Schweißpunkt-Erkennungsbereichs auf der Grundlage der Referenzposition der Adapterplatte (11).

5. Verfahren nach Anspruch 4, wobei die Erkennungsergebnisinformation ein Schweißpunkt-Erkennungsergebnis umfasst; und das Durchführen der Fehlererkennung auf der Grundlage des Erkennungsobjekts, um Erkennungsergebnisinformationen zu erhalten, Folgendes umfasst:
Suchen und Erhalten von Fleckeninformationen innerhalb des Schweißpunkt-Erkennungsbereichs, und Erhalten des Schweißpunkt-Erkennungsergebnisses durch Analyse auf der Grundlage der Fleckeninformationen, wobei Schweißpunkte als schwarze Flecken abgebildet werden.

6. Verfahren nach Anspruch 5, wobei die Fleckeninformationen die Anzahl von Flecken und/oder eine Summe von Fleckenbereichen umfassen.

7. Verfahren nach einem der Ansprüche 3 bis 6, wobei das Zellenbild von zwei Kameras (2) unter Beleuchtung der schattenlosen Lichtquelle (3) aufgenommen wird.

8. Verfahren nach einem der Ansprüche 3 bis 7, mit den folgenden Schritten:
Erkennen mit einem Sensor, dass die Zelle vor dem Aufbringen der Identifikationsschicht zu einer Erkennungsstation transportiert wird und nach dem Aufbringen der Identifikationsschicht zu einer Erkennungsstation transportiert wird,
Auslösen der Kameras der oberen Schicht und der Kameras der unteren Schicht an der entsprechenden Station, um Bilder aufzunehmen, um das Zellenbild zu erhalten,
wobei dann, wenn die Kameras der oberen Schicht beim Empfang einer Aufnahmeanweisung Bilder aufnehmen, die schattenlose Lichtquelle der oberen Schicht Licht emittiert, und gleichzeitig die Kameras der unteren Schicht Bilder aufnehmen, um zwei Sätze von Bildern zu erhalten, wobei einer von den Kameras der oberen Schicht unter Beleuchtung der schattenlosen Lichtquelle der oberen Schicht aufgenommen wird und der andere von den Kameras der unteren Schicht unter Gegenlichtbeleuchtung der schattenlosen Lichtquelle der oberen Schicht aufgenommen wird;
und wobei dann, wenn die Kameras der unteren Schicht beim Empfang einer Aufnahmeanweisung Bilder aufnehmen, die Kameras der oberen Schicht gleichzeitig Bilder aufnehmen und insgesamt vier Sätze von Bildern erhalten werden.

9. Vorrichtung zur Batteriezellenerkennung, die Folgendes umfasst:
ein Bildgewinnungsmodul (110), das dazu ausgebildet ist, durch Fotografieren ein Bild einer Batteriezelle (1) zu erhalten, das nach dem Laschenschweißen erhalten wurde, wobei das Zellenbild unter Beleuchtung einer schattenlosen Lichtquelle (3) aufgenommen wird;
ein Bildverarbeitungsmodul (120), das dazu ausgebildet ist, ein Erkennungsobjekt in dem Zellenbild zu ermitteln; und
ein Bilderkennungsmodul (130), das dazu ausgebildet ist, eine Fehlererkennung auf der Grundlage des Erkennungsobjekts durchzuführen, um Erkennungsergebnisinformationen zu erhalten, wobei das Zellenbild ein zweites Zellenbild umfasst, das durch Fotografieren der nach dem Aufbringen einer Identifikationsschicht erhaltenen Batteriezelle (1) erhalten wurde, und das Erkennungsobjekt einen Rand der Identifikationsschicht und einen Rand einer Lasche umfasst; und das Ermitteln eines Erkennungsobjekts in dem Zellenbild Folgendes umfasst:
Ermitteln einer Referenzposition einer Adapterplatte (11) in dem zweiten Zellenbild auf der Grundlage eines voreingestellten Adapterplattenmodells; und
Ermitteln des Randes der Identifikationsschicht und des Randes der Lasche (12) auf der Grundlage der Referenzposition der Adapterplatte (11).

10. Computervorrichtung, umfassend: einen Speicher und einen oder mehrere Prozessoren, wobei der Speicher computerlesbare Anweisungen speichert, die, wenn sie von dem einen oder den mehreren Prozessoren ausgeführt werden, den einen oder die mehreren Prozessoren dazu veranlassen, Schritte eines computerimplementierten Verfahrens nach einem der Ansprüche 1 bis 8 durchzuführen.

11. Ein oder mehrere Computerspeichermedien, auf denen computerlesbare Anweisungen gespeichert sind, die, wenn sie von einem oder mehreren Prozessoren ausgeführt werden, den einen oder die mehreren Prozessoren dazu veranlassen, Schritte eines Verfahrens nach einem der Ansprüche 1 bis 8 durchzuführen.

12. Computerprogrammprodukt, umfassend ein Computerprogramm, das, wenn es von einem oder mehreren Prozessoren ausgeführt wird, den einen oder die mehreren Prozessoren dazu veranlasst, Schritte eines computerimplementierten Verfahrens nach einem der Ansprüche 1 bis 8 durchzuführen.

13. Zellenerkennungssystem, umfassend: eine Bildgewinnungsvorrichtung und einen Host-Computer, wobei die Bildgewinnungsvorrichtung dazu ausgebildet ist, durch Fotografieren unter Beleuchtung einer schattenlosen Lichtquelle (3) ein Zellenbild einer Batteriezelle (1) zu erhalten, das nach dem Laschenschweißen erhalten wurde, und das Zellenbild an den Host-Computer zu senden, und der Host-Computer dazu ausgebildet ist, eine Erkennung an der Batteriezelle (1) unter Verwendung eines computerimplementierten Verfahrens nach einem der Ansprüche 1 bis 8 durchzuführen.

14. System nach Anspruch 13, wobei die Bildgewinnungsvorrichtung zwei Kameras (2) umfasst.

## Revendications

1. Procédé de détection de cellules de batterie mise en œuvre par ordinateur, comprenant :
obtenir, par prise de vue, une image de cellule d'une cellule de batterie (1) obtenue après soudage de languette, l'image de cellule étant prise sous l'éclairage d'une source de lumière sans ombre (3) ;
déterminer un objet de détection dans l'image de cellule ; et
effectuer une détection de défauts sur la base de l'objet de détection pour obtenir des informations sur le résultat de détection, **caractérisé en ce que**
l'image de cellule comprend une deuxième image de cellule obtenue, par prise de vue, de la cellule de batterie (1) obtenue après l'application d'une couche d'identification, et l'objet de détection comprend un bord de la couche d'identification et un bord d'une languette ; et la détermination d'un objet de détection dans l'image de cellule comprend :
déterminer une position de référence d'une plaque d'adaptateur (11) dans la deuxième image de cellule sur la base d'un modèle de plaque d'adaptateur prédéfini ; et
déterminer le bord de la couche d'identification et le bord de la languette (12) sur la base de la position de référence de la plaque d'adaptateur (11).

2. Procédé selon la revendication 1, dans lequel les informations sur le résultat de détection comprennent un résultat de détection de la couverture de languette ;
et effectuer la détection de défauts sur la base de l'objet de détection pour obtenir des informations sur le résultat de détection comprend :
effectuer la détection de la couverture de languette sur la base du bord de la couche d'identification et du bord de la languette (12) pour obtenir le résultat de détection de la couverture de languette.

3. Procédé selon l'une quelconque des revendications 1 à 2, dans lequel l'image de cellule est capturée par deux caméras supérieures agencées au-dessus de la cellule sous l'éclairage d'une source de lumière sans ombre de couche supérieure agencée au-dessus de la cellule, et est capturée par deux caméras inférieures agencées sous la cellule sous l'éclairage d'une source de lumière sans ombre de couche inférieure agencée sous la cellule, la source de lumière sans ombre de couche supérieure et la source de lumière sans ombre de couche inférieure pouvant être, le cas échéant, des sources de lumière sans ombre planes.

4. Procédé selon la revendication 3, dans lequel l'image de cellule comprend une première image de cellule obtenue, par prise de vue, de la cellule de batterie (1) avant l'application d'une couche d'identification, et l'objet de détection comprend une région de détection de points de soudage ; et la détermination d'un objet de détection dans l'image de cellule comprend :
déterminer une position de référence d'une plaque d'adaptateur (11) dans la première image de cellule sur la base d'un modèle de plaque d'adaptateur prédéfini ; et
déterminer la région de détection de points de soudage sur la base de la position de référence de la plaque d'adaptateur (11).

5. Procédé selon la revendication 4, dans lequel les informations sur le résultat de détection comprennent un résultat de détection de points de soudage ; et effectuer la détection de défauts sur la base de l'objet de détection pour obtenir des informations sur le résultat de détection comprend :
recherche et obtention d'informations de taches dans la région de détection de points de soudage, et obtention du résultat de la détection des points de soudage par analyse sur la base des informations de taches, les points de soudage étant représentés par des taches noires.

6. Procédé selon la revendication 5, dans lequel l'information de taches comprend le nombre de taches et/ou une somme de zones de taches.

7. Procédé selon l'une quelconque des revendications 3 à 6, dans lequel l'image de cellule est prise par deux caméras (2) sous l'éclairage de la source de lumière sans ombre (3).

8. Procédé selon l'une quelconque des revendications 3 à 7, comprenant :
détecter, à l'aide d'un capteur, que la cellule est acheminée vers une station de détection avant l'application d'une couche d'identification et vers une station de détection après l'application d'une couche d'identification,
déclencher les caméras de la couche supérieure et les caméras de la couche inférieure situées à la station correspondante pour la prise de photos, pour obtenir l'image de cellule,
dans lequel, lorsque les caméras de la couche supérieure prennent des photos après avoir reçu une instruction de prise de vue, la source de lumière sans ombre de la couche supérieure émet de la lumière, et les caméras de la couche inférieure prennent des photos en même temps, de manière à obtenir deux séries d'images, dont l'une est prise par les caméras de la couche supérieure sous l'éclairage de la source de lumière sans ombre de la couche supérieure, et l'autre est prise par les caméras de la couche inférieure sous l'éclairage en contre-jour de la source de lumière sans ombre de la couche supérieure ;
et dans lequel, lorsque les caméras de la couche inférieure prennent des photos après avoir reçu une instruction de prise de vue, les caméras de la couche supérieure prennent des photos en même temps, et on obtient au total quatre séries d'images.

9. Appareil de détection de cellules de batterie, comprenant :
un module d'obtention d'images (110) configuré pour obtenir, par prise de vue, une image de la cellule de batterie (1) d'une cellule obtenue après soudage de languette, l'image de cellule étant prise sous l'éclairage d'une source de lumière sans ombre (3) ;
un module de traitement d'images (120) configuré pour déterminer un objet de détection dans l'image de cellule ; et
un module de détection d'images (130) configuré pour effectuer une détection de défauts sur la base de l'objet de détection pour obtenir des informations sur le résultat de détection, dans lequel l'image de cellule comprend une deuxième image de cellule obtenue, par prise de vue, de la cellule de batterie (1) obtenue après l'application d'une couche d'identification, et l'objet de détection comprend un bord de la couche d'identification et un bord d'une languette ; et la détermination d'un objet de détection dans l'image de cellule comprend :
déterminer une position de référence d'une plaque d'adaptateur (11) dans la deuxième image de cellule sur la base d'un modèle de plaque d'adaptateur prédéfini ; et
déterminer le bord de la couche d'identification et le bord de la languette (12) sur la base de la position de référence de la plaque d'adaptateur (11).

10. Dispositif informatique, comprenant : une mémoire et un ou plusieurs processeurs, dans lequel la mémoire stocke des instructions lisibles par ordinateur qui, lorsqu'elles sont exécutées par le ou les processeurs, amènent le ou les processeurs à exécuter les étapes d'un procédé mis en œuvre par ordinateur selon l'une quelconque des revendications 1 à 8.

11. Un ou plusieurs supports de stockage informatique stockant des instructions lisibles par ordinateur qui, lorsqu'elles sont exécutées par un ou plusieurs processeurs, amènent le ou les processeurs à exécuter les étapes d'un procédé selon l'une quelconque des revendications 1 à 8.

12. Produit de programme informatique, comprenant un programme informatique qui, lorsqu'il est exécuté par un ou plusieurs processeurs, amène le ou les processeurs à exécuter les étapes d'un procédé mis en œuvre par ordinateur selon l'une quelconque des revendications 1 à 8.

13. Système de détection de cellules, comprenant : un appareil d'obtention d'images et un ordinateur hôte, dans lequel l'appareil d'obtention d'images est configuré pour obtenir, par prise de vue sous l'éclairage d'une source de lumière sans ombre (3), une image de cellule d'une cellule de batterie (1) obtenue après soudage de languette, et envoyer l'image de cellule à l'ordinateur hôte, et l'ordinateur hôte est configuré pour effectuer une détection sur la cellule de batterie (1) en utilisant un procédé mis en œuvre par ordinateur selon l'une quelconque des revendications 1 à 8.

14. Système selon la revendication 13, dans lequel l'appareil d'obtention d'images comprend deux caméras (2).
